# EUROPEAN PATENT APPLICATION

(11) **EP 1 124 198 A1**
(43) Date of publication of application: **16.08.2001**
(21) Application number: 00200456.2
(22) Date of filing: 11.02.2000
(51) Int. Cl.: G06N 3/12

(54) **A biological molecule based computing method based on a blocking principle**

(71) Applicant: Universiteit Leiden, 2312 AV Leiden (NL)
(72) Inventor: Rozenberg, Crzegorz, 3723 JB Bilthoven (NL); Spaink, Herman Pieter, 2341 SG Oegstgeest (NL)
(74) Representative: Ottevangers, Sietse Ulbe

(57) **Abstract**

A computational method that makes use of DNA molecules is disclosed. The method can be summarized as follows. First, a set of DNA molecules representing (by their sequences) all possible assignment to all variables of a given computational problem is generated (this is the so-called combinatorial library of the problem). Second, all the DNA molecules representing assignments which do not correspond to solutions of the problem are inactivated (blocked) for reproduction or detection. Finally, one has to check only whether any active (non-blocked) molecules remain: a solution of the problem exists if and only if any such molecules remain. In principle this allows to solve computationally difficult problems. We illustrate our method by outlining a solution for the famous satisfiability problem using the polymerase chain reaction (PCR) method only.

## Description

The present invention relates to the field of biology and computer science, in particular it relates to the use of biological molecules for computational purposes.

Biological molecules such as nucleic acid and protein are complex polymers of rather simple molecules. DNA (deoxyribonucleic acid) is an unbranched polymer used by organisms to store their genetic information. A DNA polymer is usually referred to as a DNA strand and is composed of monomer molecules, which are called nucleotides. Each nucleotide is connected to the next in a polymerization process. Nucleotides differ in their bases, of which some typical representatives are: adenine (A), guanine (G), thymidine (T) or cytosine (C). Considering that for each position in a DNA strand at least four possible bases are possible it is not difficult to imagine that many different sequences can be generated. In fact with each added nucleotide the number of possible combinations can be increased by a factor of four.

So, a DNA strand comprises a *sequence;* this is the sequence of the nucleotides from one end of the DNA strand to the other. The ends of a DNA strand are chemically different: one end is called the 5' end while the other end is the 3' end. So single-stranded DNA has a sequence and an *orientation.*

There are several features of DNA molecules which makes them in principle attractive for computing purposes, we name here three of them: (1) Watson-Crick complementarity (2) the availability of natural enzymes which can recognize DNA sequences and (3) the potential for massive parallelism.

The use of computing with biological molecules allows for the solving problems which presently do not have feasible (in time) solutions within the available silicon based technology. Computing with biological molecules and in particular DNA molecules, can solve many of such problems, because the massive parallelism of DNA strands allows the trillions of operations taking place simultaneously.

A natural target class of problems which require massive parallelism are the so-called NP complete problems (see for a description: M. R. Garey and D. S. Johnson, Computers and Intractability, A Guide to the Theory of NP-Completeness, W.H. Freeman and Co., San Francisco, 1979.). Perhaps the most famous of the problems from this class is the satisfiability (SAT) problem for Boolean formulas (explained below). Adleman (L. M. Adleman, Science, 266: 1021-1024, 1994) was the first to conduct an experiment that constituted a "proof of principle" for the use of DNA computing for solving an NP-complete problem. After this pioneering work a number of DNA-based computing methods have been investigated. The method used by Adleman is the filtering method. It starts with a set of DNA molecules which represent all possible assignments to all variables of a given problem (called the combinatorial library) and then filters out the molecules corresponding to good solutions. Lipton (R. J. Lipton, Science, 268: 542-545, 1995) has outlined a solution for the SAT problem using the filtering method.

The current methods for computing with biological molecules have, as outlined above, in principle an enormous advantage over the silicon based technologies. Technologically, however, the current methods for computing with biological molecules are cumbersome. Most methods require some knowledge of characteristics of the desired solution in order to filter out the desired solution.

The present invention provides a method for finding a potential solution to a computational problem though a DNA computing method. In this aspect of the invention, the method utilizes a library of biological molecules. The library comprises a number of biological molecules that represent a set of combinations of values for variables of the computational problem. Upon generation of the library, it is not known whether a specific instance of the computational problem is solvable, i.e. has a solution. To determine whether the problem instance is solvable one can determine whether the library comprises a biological molecule that represents a solution to the problem instance. In the art, many methods have been proposed to find such a solution, all with their particular advantages and disadvantages. In the present invention we provide a method that is based on preventing detection of combinations of values for variables to said computational problem that do not represent a solution. Prevention of detection is achieved by blocking at least one biological molecule that represents a combination of values for variables to said computational problem that do not represent a solution. Blocking is achieved by providing the library with a blocking agent.

The method of the invention is very versatile in that many different computational problems can be solved. It is often much easier to find a combination of values that do not represent a solution (i.e. represent a false solution) than it is to find a combination of values that represent a solution to the computational problem (also referred to as a true solution). In fact, for many computational problems it is possible to easily determine all possible false solutions to the computational problem. Many computational problems can be expressed as boolean formulas. Boolean formula's can be written into a conjunctive normal form (CNF). The conjunctive normal form representation of a computational problem allows a person skilled in the art to determine rapidly all combinations of values for variables that represent false solutions to the problem. This process can also easily be automated using a computer. In the present invention it is possible to generate one or more blocking agents that are capable of blocking essentially all biological molecules that represent false solutions to the computational problem, leaving essentially only true solutions unblocked (if any exist). In addition, if one solution is found in the library, a blocking agent capable of blocking this solution may be provided to the library, thereby leaving only other solutions to the problem unblocked, (if they exist). This process can be repeated until essentially all solutions to the problem have been found. A particular advantage of the present invention over the current filtering methods is that it can be performed in essentially one step. By blocking detection of essentially all biological molecules representing combinations of values that represent a false solution to the problem one can in one step detect whether the problem comprises a true solution. Repeated incubations with one or more blocking agents and selections of part of the biological molecules are possible in the present invention, but not required.

Although, preferably all biological molecules representing false solutions are blocked by a blocking agent, the present invention is already useful when a limited number of false solutions are blocked. Partial blocking at least in part limits the search for a true solution using a method of the art. A method of the invention can therefore easily be combined with a method in the art, for instance a filtering method, to simplify the search for a solution.
Thus, in one aspect the invention provides the use of a method for determining whether a specific biological molecule is present in a library of biological molecules, wherein said library represents a set of combinations of values for variables of a computational problem, the method comprising providing said library with a molecule capable of associating with at least one biological molecule representing a combination of values for variables to said problem, wherein said association marks said at least one biological molecule as a combination of values representing a false solution to said problem, and determining whether said specific biological molecule is present in said library. The marking of a combination of values that represents a false solution (if it exists)leaves a combination that represents a true solution unmarked. By providing the library with sufficient molecules to associate with essentially all false solutions to said computational problem, only those biological molecules that represent true solutions to the problem are left unmarked. This, of course, under the assumption that the considered problem instance is solvable, i.e. comprises a true solution. When a biological molecule representing a true solution is detected, it may be identified. Identification entails the determination of the specific combination of values represented by said biological molecule. Upon identification of a true solution a blocking agent can be devised capable of blocking detection of biological molecules representing this solution in the library. The library can be provided with this blocking agent. A method of the invention can then be used to determine whether said library comprises another true solution to said problem. Thus. in one embodiment the invention provides a method of the invention, further comprising blocking an identified biological molecule representing a true solution of said problem and identifying in said library, a possibly present biological molecule representing a combination of values for variables, which combination is a another true solution to said problem.

The marking of biological molecules can be used to discriminate between marked and/or unmarked biological molecules and thereby between biological molecules representing respectively false or true solutions to said computational problem. In a preferred embodiment blocking of detection of a marked biological molecule is achieved using a blocking agent capable of blocking detection of said at least one biological molecule. Blocking of detection of a biological molecule representing a false solution to said computational problem at least limits the search for a biological molecule representing a true solution to said problem. In a preferred embodiment the detection of essentially all biological molecules representing a false solution to said computational problem is blocked. Thus if a biological molecule is detected this means that the problem comprises at least one solution. A blocking agent is a physical and/or any other means for enabling elimination of detection of a biological molecule.

Non-limiting examples of biological molecules that can be used to generate a library of molecules that represent a set of combinations of values for variables of a computational problem comprise nucleic acid, protein and/or lipid, or a functional equivalent of these biological molecules. Preferably, said biological molecule comprises nucleic acid. A functional equivalent of nucleic acid comprises the same base-pairing capabilities as nucleic acid in kind not necessarily in amount.

In a preferred embodiment said at least one combination of values for variables of said computational problem comprises a false solution to said computational problem.

Detection of unblocked biological molecules is preferably performed with an amplification step. In this way the number of unblocked molecules is increased relatively to the number of the blocked molecules thereby making the detection a lot easier. Thus, in one embodiment the use of the invention further comprises subjecting said library to an amplification step, wherein said blocking agent is capable of at least in part preventing amplification of said at least one biological molecule representing at least one combination of values for variables of said computational problem.

However, detection of unblocked molecules does not have to be performed in an amplification step. It is very well possible to devise other methods of detecting unblocked molecules. For instance, one can combine the biological molecules with a fluorochrome that upon blocking with a blocking agent becomes quenched. In this way detection of unblocked molecules can be done by simply determining whether fluorescence can still be detected.

Another way of detecting an unblocked biological molecule comprises providing a digestion signal to the biological molecule with the blocking agent. The presence of undigested biological molecules in the library then reflects the presence of unblocked molecules.

Although unblocked molecules can be detected in many ways, biological molecules are preferably detected using an amplification step. The amplification step does not have to be performed for detection of unblocked molecules. It can also be performed to increase the amount of molecules to facilitate further handling of the material. Preferably, the amplification step comprises a nucleic acid amplification reaction such as polymerase chain reaction and/or a nucleic acid amplification in a cell.

A computational problem often can be represented through two or more sub problems. This feature can be used to design and/or choose the blocking agent. Defining sub problems to a computational problems is advantageous for the present invention. Particularly when for a desired solution the outcome of all sub problems must be true, it may be easier to design the blocking agent. In this case, finding an agent capable of blocking a part in a biological molecule representing a false solution of a sub problem identifies the biological molecule as having not the desired solution of the complete problem. In a preferred embodiment of the invention said at least one blocking agent is capable of blocking at least a part of said at least one biological molecule wherein said part represents at least one combination of values for variables of a sub problem of said computational problem. An additional advantage of defining sub problems is that all biological molecules comprising a representation of a particular false solution of a sub problem can be blocked by the same kind of blocking agent, irrespective of the particular representations of solutions of other sub problems in the biological molecules. Considering that in a preferred embodiment of the invention all false solutions of the computational problem are blocked by a blocking agent it is in this case entirely possible that more than one blocking agent is blocking a particular biological molecule.

Many computational problems can be represented through Boolean formulas. The Boolean formulas are particularly suitable for encoding solutions of a computational problem into a library of biological molecules. A Boolean formula can be given a Conjunctive Normal Form (CNF) from. It consists of a set of clauses linked together by the conjunction "and" operator. Therefore if an assignment for all variables is a solution of a CNF formula, then each and every clause in the formula must be true. Thus a clause can be seen as a sub problem of the complete problem. The computional problem has a solution only when all of the clauses of the CNF representation of the Boolean formula are true. Therefore, in a preferred embodiment a blocking agent is capable of blocking a part of a biological molecule in said library that represent a false solution of at least one clause of said CNF representation of the mathematical problem. Preferably, said CNF representation is a 3 CNF representation.

A library of biological molecules can be generated from a number of different biological molecules provided that it comprises sufficient information storage capacity. Examples of suitable biological molecules are nucleic acid derived molecules, protein and lipids. Preferably, said biological molecule and/or said blocking agent comprises nucleic acid or a functional analogue thereof.

In one aspect of the invention the basic principle of blocking is based on the fundamental Watson-Crick complementarity property of DNA. This means that, due to their chemical nature, two DNA strands can become bonded resulting in a helical double-stranded DNA molecule, the famous double helix (Watson and Crick, 1953). Bonding of DNA strands arises from the specific pairing (formation of hydrogen bonds) of the bases: adenine (A) always pairs with thymidine (T) and guanine (G) always with cytosine (C). The complementary strands of a double-stranded molecule are arranged in an anti-parallel fashion. This means that the two stands are in a 'head-to-tail' arrangement: the 5' to 3' orientation of one strand corresponds to the 3' to 5' orientation of the complementary strand. Raising the temperature can lead to separation of strands of a double-stranded DNA molecule resulting in two single-stranded DNA molecules. This process is called *melting.* If after melting the temperature is slowly lowered, the complementary strands will anneal to form the original double-stranded helical molecule again. When a short oligonucleotide (called primer) is annealed to a single stranded DNA molecule, this oligonucleotide can serve as a primer for an enzyme, called DNA polymerase, to produce a second strand of complementary DNA.

There are several technical approaches that can be followed for the inactivation of DNA molecules and subsequent detection. One method which we describe in detail is inactivation for replication using peptide nucleic acid (PNA) blocking, and PCR (Polymerase Chain Reaction) detection. As an alternative to PCR, of course, any many for nucleic acid amplification can be used. PCR is a technique used to amplify specific DNA strands *in vitro.* For PCR the nucleotide sequence of the ends of the DNA strands to be amplified has to be known. This is necessary because short oligonucleotides primers complementary to the end of the DNA strands to be amplified have to be synthesized. A PCR 'cycle' consists of: (1) melting of the double-stranded target DNA resulting in single-stranded target DNA molecules, (2) cooling to allow annealing of specific primers to the target DNA, and (3) extension of the primers by the enzymatic activity of DNA polymerase. It is very important to realize that the extension products of one primer can serve as a template for the other primer in the next cycle, so each cycle (theoretically) doubles the content of target DNA. The DNA polymerases commonly used for PCR are thermostable, so they retain activity despite the high temperatures during the melting periods. In this example, PCR amplification of faulty solutions is blocked, so that only the desired solutions are amplified. This blocking can be achieved through the addition of specific small peptide nucleic acid (PNA) molecules to the PCR reaction mixture. PNA molecules are single-stranded DNA mimics with a pseudopeptide backbone (see for a detailed description M. Egholm et al., Nature 365:566-568, 1993). PNA's are functional equivalents of nucleic acid. PNA's have been shown to hybridize sequence-selectively to complementary sequences of DNA, forming Watson-Crick double helices. Moreover, PNA's do so with higher affinity than comparable DNA molecules. So, by adding PNA molecules that anneal specifically to the target DNA molecules in the same region as the DNA primers, the latter cannot anneal. If the target molecules represent faulty solutions, they will have PNA's annealed to them instead of DNA primers. Because a PNA cannot serve as a primer for DNA polymerase, polymerization, and hence amplification of the target DNA, is prevented. Therefore in one embodiment of the use of the invention said blocking agent comprises peptide nucleic acid.

After PCR the amplified DNA molecules, representing the good solutions, can be separated and visualized using many known methods including DNA-chip technology. We also want to mention some alternatives for blocking/detection of DNA molecules. One can also block DNA molecules by making them not accessible for restriction enzymes. This can be done by adding PNA oligonucleotides which anneal to the target DNA molecule at the position of a recognition site of a restriction enzyme. The detection reaction is then based on cloning the restricted molecules in a plasmid vector which is replicated *in vivo.* Alternatively, the detection can be performed on the basis of size of a DNA molecule which is given in terms of the number of nucleotide base-pairs per molecule. In this embodiment of the invention solutions exist, if molecules smaller than the standard size exist in the reaction buffer.

The rapidly developing technique of DNA-chip technology provides a helpful tool for the readout of the solutions. It is preferred that the library is present on the chip and the blocking agent is added to the chip. Preferably the biological molecules are arranged such that individual molecules are in physically separated positions of the chip, for instance in an array format. Unblocked biological molecules can then be identified by finding the positions not comprising the blocking agent. On the other hand, the chip may comprise (an array of) blocking agents capable of blocking a variety of biological molecules in the library. The library can then be added to the array. Unblocked molecules can then be detected in the fraction not associated with the blocking agent.

A person skilled in the art is able to generate other arrangements of the biological molecules and/or blocking agents on the chip such that the number of different biological molecules and/or blocking agents per position is more than one, while still being able to detect unblocked molecules. Reference is made to a previously mentioned example using a fluorochrome.

Considering the chip implementation of the use of the invention, a preferred embodiment of the invention comprises the use of the invention wherein said library of biological molecules and/or said blocking agent is physically linked to a solid surface. A solid surface is advantageous for many purposes not in the least for detection purposes and handling purposes. The mentioned chip format is desirable when either the library or the blocking agent is present in a multiplicity of compartments and wherein each of compartment comprises one type of biological molecule and/or one type of blocking agent. The compartments may also comprise more than one type of biological molecule or blocking agent.

Preferably, the blocking agent and/or the biological molecule comprises a label, preferably a fluorophore such as a fluorescent label. The fluorophore allows discrimination between marked and unmarked biological molecules. A fluorophore preferably comprises a fluorescent label. In a non-limiting example of this embodiment of the invention we describe the use of a blocking agent comprising a label in combination with a library of biological molecules present in an array on a chip. Providing the library with one labeled blocking agent will identify a position in the array comprising a biological molecule representing a false solution the problem. When each position comprises essentially only a biological molecule representing one combination of values then one can easily find biological molecules representing a true solution to the problem by providing the library with labeled blocking agents capable of associating with essentially all biological molecules representing false solutions to said problem. In this case positions that are left unlabeled comprise a true solution to the problem. Detection of positions not containing a label thus identifies such true solutions. In another preferred embodiment of the invention, quenching of fluorescence is used to discriminate between marked and/or unmarked biological molecules. When all elements of the combinatorial library have been labeled by a fluorescent dye the elements which do not represent a solution can in a preferred embodiment, be blocked for fluorescence by oligonucleotides (or PNAs) which, through annealing, inactivate, or at least decrease in a detectable way, the fluorescence of the target DNA molecule. This inactivation can be achieved by the well-known principle of "quenching". Quenching of fluorescence can result from the presence of another fluorescent dye at the blocking oligonucleotide (or PNA), which by annealing to the target nucleotide, comes in close vicinity of the fluorescent dye attached to the biological molecule. As a non-limiting practical methodology to apply this principle we propose to link the fluorescently labeled combinatorial library to the surface of a chip. After annealing with the fluorescently labeled blockers, one can read out the solutions by detection of the positions of the chip which remain fluorescent. Such a chip, based on the blocking of fluorescence can be described as a "quenching chip readout". We also want to mention that this methodology can be easily combined with other DNA-based computing methods such as for example filtering.

In another aspect the invention provides the use of a blocking agent for disabling detection of a biological molecule, representing a combination of values for variables of a computational problem, in a library of biological molecules, wherein said library represents a set of combinations of values for variables of said computational problem. In another embodiment the invention provides the use of a blocking agent for enabling elimination of detection of a biological molecule in a library of biological molecules representing a set of combinations of values for variables of a computational problem.

In a preferred embodiment the invention provides a method or a use of the invention, wherein said computational problem comprises a SAT problem and/or a SAT related problem.

### Examples

We illustrate the use of the blocking method for the satisfiability (SAT) problem using the PCR method only. Let V = { p₁, ...,pₙ} be a set of Boolean *variables* -- their values may be only 0 and 1 (0 stands for "false" and 1 stands for "true"). A *literal* is either a variable pᵢ or its negation ¬pᵢ, we say that pᵢ, ¬ pᵢ are *literals for* pᵢ.

We consider two logical operations: v ("or") and Λ ("and"). A *clause E* is an expression of the form t₁ v ... v tₘ where each tᵢ is a literal; for the purpose of this example we may assume that for each variable pᵢ there is at most one literal for pᵢ in E. A *Boolean formula* (in conjunctive normal form, CNF) is an expression of the form E₁ Λ ... Λ Eₘ where each Eᵢ is a clause.

An assignment is a function φ on V which for each pᵢ has the value either 0 or 1. To compute the value of a literal (for a given assignment φ) we use the rule: ¬ 0 = 1 and ¬ 1 = 0. To compute the value of a clause we use the rule: 0 v 0 = 0 and 0 ∨ 1 = 1 ∨ 0 = 1 ∨ 1 = 1. To compute the value of a formula we use the rule: 0 ∧ 0 = 0 ∧ 1 = 1 ∧ 0 = 0 and 1 ∧ 1 = 1.

We say that an assignment φ *satisfies* a formula Φ if the value φ(Φ) of Φ under φ is 1. Otherwise φ *falsifies* Φ (and φ is a *falsifier* of Φ). We say that Φ is *satisfiable* if there is an assignment satisfying Φ.

Example: Let V = {p₁,p₂,p₃} be a set of variables and let Φ = E₁ **∧** E₂ ∧ E₃ be the Boolean formula over V such that E₁ = p₁ ∨ ¬ p₂, E₂ = p₁ ∨ p₂ ∨ ¬ p₃ and E₃ = ¬ p₁ ∨ ¬ p₃.

Let φ₁ be the following assignment: p₁ = 0, p₂ = 1, p₃ = 0. Then φ₁(E₁) = 0 ∨ 0 = 0, φ₁ (E₂) = 0 ∨ 1 ∨ 1 = 1 and φ₁(E₃) = 1 ∨ 1 = 1. Thus φ₁ (Φ) = 0 ∧ 1 ∧ 1 = 0. Let φ₂ be the assignment: p₁ = 0, p₂ = 0, p₃ = 0. Then φ₂(E₁) 0 ∨ 1 = 1, φ (E₂) = 0 ∨ 0 ∨ 1 = 1, and φ₂(E₃) = 1 ∨ 1 = 1. Thus φ₂(Φ) = 1 Λ 1 Λ 1 = 1. Hence φ₁ falsifies Φ, φ₂ satisfies Φ, and Φ is satisfiable.

The Satisfiability Problem (SAT) is to determine whether or not an arbitrary Boolean formula Φ is satisfiable. Note that SAT does not require that one finds a satisfying assignment in the case that Φ is satisfiable.

The Find Satisfiability Problem (FIND SAT) is to determine whether or not an arbitrary Boolean formula Φ is satisfiable, and if it is then to give an assignment satisfying Φ. In the sequel we assume that we have an infinite sequence of (available) variables p₁,p₂,p₃,... and whenever we consider the case of n variables, the variables are: p₁,p₂,...,pₙ.

### Blockers

To start with, we need to code for each (Boolean) variable pᵢ its two possible values pᵢ = 1 and pᵢ = 0. Let qᵢ⁽¹⁾ be a single strand coding the value p₁ = 1 and qᵢ⁽⁰⁾ be a single strand coding the value pᵢ = 0.

Example: The coding qᵢ⁽¹⁾ = A and qᵢ⁽⁰⁾ = C for all 1 ≤ i ≤ n is independent of a variable - the value 1 is always coded by A and the value 0 is always coded by C.

Now we can code all possible assignments of variables by single strands. To this aim, for a given number of variables n, a n-strand is a strand of the form f₁f₂...fₙ where each fᵢ is either qᵢ⁽¹⁾ or qᵢ⁽⁰⁾. The set of all n-strands is denoted by Sₙ.

For a n-strand s, we use asg(s) to denote the corresponding assignment φ, and for an assignment φ we use str(φ) to denote the corresponding n-strand. A *blocker* of a n-strand s is its complement, it is denoted by b(s). Now, given a Boolean formula Φ = E₁ ∧ E₂ ∧... ∧ Eₘ over n variables, for each clause Eᵢ a *blocker* of Eᵢ is a blocker of a n-strand s such that *asg(s)* is a falsifier of Eᵢ. The set of all blockers for Eᵢ is denoted by B(Eᵢ). Then the set of all blockers for Φ, B (Φ) is the union of B(Eᵢ) for all clauses Eᵢ of Φ; thus B(Φ) = B(E₁) ∪ ... ∪ B(Eₘ).

For example, let n = 3 and let Φ = E₁ Λ E₂ where E₁ = ¬ p₁ ∨ p₃ and E₂ = ¬ p₁ ∨ ¬ p₂ ∨ ¬ p₃. The falsifiers for E₁ are φ₁ and φ₂ where φ₁(p₁) = 1, φ₁(p₂) = φ₁(p₃) = 0, and φ₂(p₁) = φ₂(p₂) = 1, φ₂(p₃) = 0. The falsifier for E₂ is φ₃ such that φ₃(p₁) = φ₃(p₂) = φ₃(p₃) = 1.

Hence if we use the coding from Example 1 then the blockers for E₁ are TGG and TTG, because str (φ₁) = ACC and str(φ₂) = AAC. The blocker for E₂ is TTT becuase str(φ₃) = AAA. Hence the set of blockers for Φ is B(Φ) = { TGG, TTG, TTT}.

### An Algorithm for SAT

We begin with an initial solution Z₀ that contains the set Sₙ of all n-strands. To know Sₙ, we need to know only the number of variables n (without knowing Φ). Thus we assume that such a solution is prepared in advance -- it is a "ready product on a shelf". This idea is common to filtering methods. Here is an algorithm (**aaaaaa**₁) for solving SAT.
ALGORITHM **aaaaaa**₁
Input: A Boolean formula Φ of n variables.
1. Add B (Φ).
2. PCR.
3. PCR Successful?
   If so, go to 5.
   If not, go to 4.
4. Output "NO" and Stop.
5. Output "YES".
6. Stop.

Once we know the input formula Φ, we proceed to Step 1 and add B (Φ) to Z₀ obtaining Z₁. The intention of this step is to "block" (by annealing) all the n-strands which represent assignments that falsify Φ.

In Step 2, Z₁ is PCR'ed and Z₂ is obtained. Here the only n-strands that can be successfully multiplied by PCR are the n-strands that have not been blocked in Step 1 (after the blockers from B(Φ) have been added). But these are precisely the n-strands s such that the assignment asg(s) satisfies Φ. Thus the PCR here is successful if and only if there exists an assignment satisfying Φ.

In Step 3 we check whether or not the PCR from Step 2 was successful. This is the case if the volume of Z₂ is "clearly" larger than the volume of Z₁.

If the PCR was not successful, then we proceed to Step 4, print "NO", and stop.

If the PCR was successful, then we proceed to Step 5, print "YES", and stop in Step 6.

It must be clear by now that this algorithm prints "YES" (and stops) if and only if Φ is satisfiable.

We continue our example: here n = 3 and S₃ = { CCC, CCA, CAC, CAA, ACC, ACA, AAC, AAA }. Since B(Φ) will anneal to their complements in S₃, the set of single strands in Z₁, ss (Z₁), equals S₃ - B(Φ). Hence *ss*(Z₁) = { CCC, CCA, CAC, CAA, ACA }. It is easily seen that indeed *asg*(*ss*(Z₁)) is the set of all assignments satisfying Φ. Since this set is not empty, the PCR from Step 2 will be successful, and so the algorithm will output "YES" and stop.

We feel that the following comments concerning the above algorithm are needed here, even before we discuss later the "laboratory implementation" of the algorithm.
(1) We may construct B(Φ) by reading Φ from left to right, clause by clause, as follows. Let E be a clause of Φ, and we assume that literals in E are ordered according to the order p₁,...,pₙ of variables. Let, e.g., E = p₁ v p₂ ∨ ¬ p₄, where n = 4. Reading E from left to right we can spell out the falsifiers of E: p₁ = 0, p₂ = 0, p₃ = "any value", p₄ = 1. Thus if a variable pᵢ is present in E, then we set pᵢ = 0, and if ¬ pᵢ is present in E, then we set pᵢ = 1. If neither pᵢ nor ¬ pᵢ is present in E, then we set "any value" which means that pᵢ can be either 0 or 1.
   The set of blockers of E is then the set of complements of the n-strands that code the falsifiers. Thus, reading E from left to right we can spell out the blockers of U: "first G", "then G", "then either G or T", "then T" (recall that 0 is coded by C and 1 is coded by A).
   Hence we have 2 blockers here: GGGT and GGTT. Spelling out the blockers while reading E from left to right may be considered as giving instructions (for a "robot") for synthesising the set of blockers for the clause considered. Hence for E as above the synthesis would go as follows.
   - "first G": take a solution R₁ with "enough G" (each G nucleotide is hooked to a solid support at its 3'-end).
   - "then G": attach G to all the free 5'-ends of molecules in R₁ getting in this way R₂.
   - "then either G or T" : divide R₂ into two solutions R_{2,1,} R_{2,2} of equal volume, attach G to all the free 3'-ends of molecules in R_{2,1} getting R_{2,1,G}, attach T to all the free 5'-ends of molecules in R_{2,2} getting R_{2,2,T}, then mix R_{2,1,G} with R_{2,2,T} getting R₃.
   - "then T": attach G to all the free 5'-ends of molecules in R₃ getting in this way R₄. Clearly R₄ contains "enough" (and "equal amounts") of all the blockers of U.

   If neither p₁ nor ¬ p₁ is present in a clause, then the initial mixture R₁ will have "enough G" and "enough T" hooked to a solid support. Then the synthesis proceeds as outlined above.
(2) An innocent phrase "add B(Φ) to Z₁" requires some computation to ensure that all strands from Z₁ to be blocked will be indeed blocked. This is a part of the laboratory procedure.
(3) Since PCR is performed in Step 2, it is clear that our representation of n-strands and blockers is very simplified. Clearly, one needs to prime strands to be amplified, and so all the n-strands will have special prefixes and suffixes that are needed for a PCR. The blockers are then modified accordingly.

### An Algorithm for FIND SAT (and for FULL SAT).

Here is an algorithm (**aaaaaa** ₂) for solving FIND SAT.
ALGORITHM **aaaaaa** ₂
Input: A Boolean formula Φ of n variables
Steps 1 through 5 are as in **aaaaaa**₁.
6. Take a sample n-strand s.
7. Sequence s.
8. Output *asg*(s).
9. Stop.
If the algorithm **aaaaaa**₁ outputs "YES", then **aaaaaa**₂ continues in Step 6 by taking a random sample strand from the solution Z₂ which is the "end solution" of **aaaaaa**₁.

This sample strand is sequenced in Step 7, the resulting sequence is outputed in Step 8, and **aaaaaa**₂ stops in Step 9. It is easy to see that this algorithm **aaaaaa** ₂ either (1) stops and outputs "NO", or (2) stops and outputs "YES φ". Case (1) holds if and only if Φ is not satisfiable, and case (2) holds if and only if Φ is satisfiable and φ is an assignment satisfying Φ.

It should be clear by now, that by iterating PCR we can find out *all* the assignments that satisfy Φ.

The Full Satisfiability Problem (FULL SAT) is to determine whether or not an arbitrary Boolean formula Φ is satisfiable, and if it is, to give all assignments satisfying Φ.

Here is an algorithm **aaaaaa**₃ for solving FULL SAT.
ALGORITHM **aaaaaa** ₃
Input: A Boolean formula Φ of n variables.
Steps 1 through 8 are as in calA₂.
9. Add b(s)
10. PCR
11. PCR Successful?
   If so, go to 6.
   If not, go to 12.
12. Output "END"
13. Stop.

In Step 9 we add b(s) blocking in this way strands representing the last successful assignment asg(s) that we found. The resulting solution Z₃ is then PCR'ed in Step 10 yielding solution Z₄; the blocked strands s are then not multiplied by the PCR.

In Step 11 we check whether or not the PCR from Step 10 was successful. This is the case if the volume of Z₄ is "clearly" larger than the volume of Z₃.

If this PCR was not successful, then we proceed to Step 12 printing "END", and then the algorithm stops.

If this PCR was successful, then we go back to Step 6 and repeat the cycle of discovering a new assignment satisfying

Φ and checking whether there are more assignments that satisfy Φ.

In order to facilitate a better understanding of experimental implementation of the present invention we give below a description of a blocking procedure verified by our laboratory experiments.

### PROCEDURE

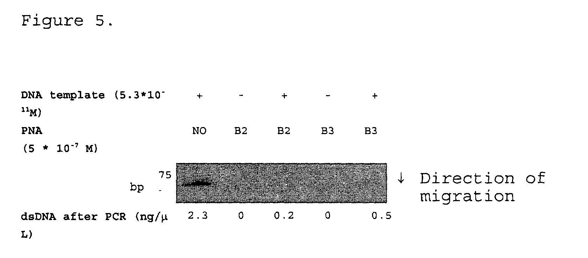

To experimentally test the principle of blocking, a single-stranded DNA molecule 75 nucleotides in length was synthesized (ISOGEN Bioscience BV Maarsen, The Netherlands). This molecule represents a potential solution to a computing problem and functions as the template molecule, which can be amplified by PCR. Specific primers (ISOGEN Bioscience BV Maarsen, The Netherlands) were obtained so that the template could by multiplied by PCR (fig. 5). The five nucleotides at the 5' end of the PNA blocking molecules are the same as the five nucleotides at the 3' end of one of the primers used (fig. 5). This region of overlap of five nucleotides results in a situation where either a PNA blocker or a primer can bind to the template. By hybridizing with their complementary template sequence the PNA molecules prevent hybridization of one of the primers with the template. Because PNA's cannot be extended by DNA polymerases, hybridization of PNA's results in 'blocking' of the polymerization.

Two different 13-mer PNA blocker-molecules were synthesized (ISOGEN Bioscience BV, Maarsen, The Netherlands). PNA's were chosen as blocking molecules because they hybridize sequence-selectively with DNA and do so with a higher affinity, so at higher temperature, than comparable DNA molecules. This is incorporated in the PCR by lowering the temperature after melting to a temperature at which the PNA blockers can anneal to the template DNA. After this step the temperature is lowered further to the annealing temperature of the DNA primers.
One PNA blocker molecule, called B2, is perfectly complementary to a region of the template whereas blocker B3 has a mismatch one nucleotide from the 3' terminus. This mismatch should result in a very small difference in hybridization stability between B2 and B3, so a decrease in blocking efficiency of B3 relative to B2. If it would be possible to detect this decrease in blocking efficiency, one could use blocking to discriminate between solution molecules differing from one another by only one nucleotide. The positive control is the PCR mixture with template DNA but without PNA blocker. With this mixture normal amplification by PCR should be observed. As a negative control a PCR mixture containing all components, except the DNA template, is taken along. After the PCR the resulting DNA is analyzed on an ethidiumbromide stained polyacrylamid gel (fig. 5).

As can be seen from the gel in figure 5, addition of any of the two blockers B2 or B3 clearly reduces the amount of product formed in the PCR. In case of B2, the amount of PCR product is below the detection limit of the gel. If B3 is used, a faint band can be seen. When the perfectly complementary blocker B2 is used, relatively more reduction is achieved than with the one mismatch blocker B3, so even one mismatch can indeed yield a detectable reduction of blocking efficiency. Quantification of the double-stranded DNA (dsDNA) concentration after PCR (fig. 5) indicates that addition of B2 reduces the concentration of dsDNA from 2.3 ng/µL to 0.2 ng/µL, a reduction of 91%. Addition of B3 also results in less dsDNA after PCR, though the reduction of 78% is significantly less than the 91% achieved by B2.

From the results of the described experiment it can be concluded that blocking of PCR amplification using specific PNA blockers is possible. Using a fully complementary PNA blocker, a 91% reduction in the amount of dsDNA after PCR can be achieved. If, however, a one-mismatch blocker is used, the blocking efficiency is reduced significantly to 78%. These results show that the method of blocking by PNA is possible. It is clear that the percentages of blocking can be further improved. Further evaluation of the optimal conditions for blocking could easily be performed using the LightCycler™ (Roche Diagnostics Nederland B.V., Almere, The Netherlands).

Another objective was to prove that a significant reduction in blocking efficiency could be detected if a PNA blocker with one mismatch was used. If it would be possible to detect this decrease in blocking efficiency, one could use blocking to discriminate between DNA molecules differing from one another by only one nucleotide. For this purpose the blocker B2, which had a fully complementary sequence to part of the template was used and compared with B3, which had one mismatch at the second nucleotide from the 3' terminus. Theoretically one would expect the association of B2 to the template to be just somewhat stronger than that of B3. From the results of the experiment described it can be concluded that under the experimental conditions tested B2 blocks better than B3, though the difference is relatively small. This relatively small decrease in blocking efficiency (13%) can be explained by the problem of the relatively slow cooling of the PCR apparatus to annealing temperature, during which the one-mismatch blocker can anneal to the template. Another reason is that the mismatch in B3 is one nucleotide from the 3' terminus. According to recent literature (Igloi, 1998) this results in a very small difference in hybridization stability between B2 and B3, so only a very small decrease in blocking efficiency of B3. If the mismatch had been in the third or fourth position from the 3' terminus the difference in hybridization stability between B2 and B3 would have been considerably larger, resulting in a bigger difference in blocking efficiency. So, the comparison between B2 and B3 is in fact the one at which one would expect to see a very small difference in blocking efficiency. This difference could be detected, indicating that the experimental setup, despite the limitations described above, is quite effective.

### Brief description of the figures

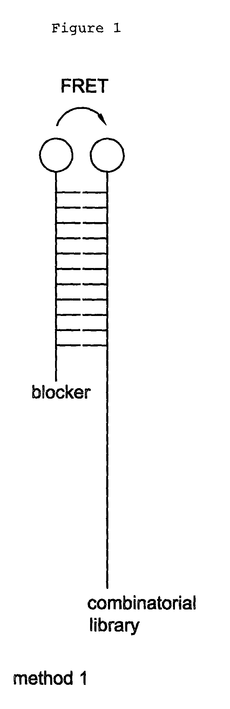

Figure 1. Schematic representation of a method in which detection of a biological molecule of a combinatorial library. may be blocked by a blocking agent. In this example the blocker comprises a sequence that is complementary to a part of the nucleic acid sequence of the biological molecule thereby allowing hybridization. Both the biological molecule and the blocker comprise a fluorescent label (indicated with an open circle). Through the close proximity of the labels of the blocker and the biological molecule, fluorescence of at least the label associated with the biological molecule is quenched (FRET; Fluorescence: Resonance Energy Transfer) thereby not allowing detection of the biological molecule that is associated with the blocker. Quenching of course does not take place when no blocker is associated, thus allowing detection of the label associated with the biological molecule when the biological molecule is not associated with the blocker.

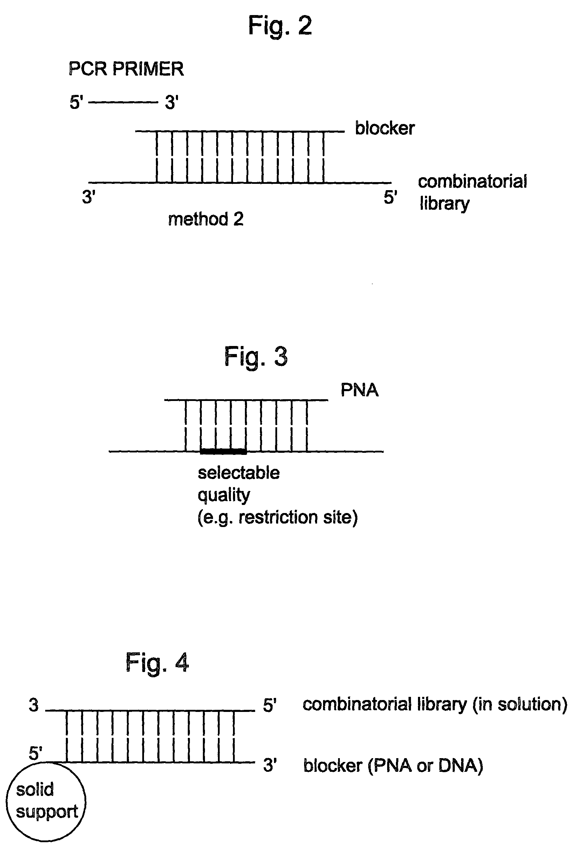

Figure 2. Schematic representation of a method in which detection of a biological molecule of a combinatorial library may be blocked by a blocking agent. In this example the blocker comprises a sequence that is complementary to a part of the nucleic acid sequence of the biological molecule thereby allowing hybridization. Hybridization of the blocker prevents at least in part hybridization of a PCR primer thereby disabling at least in part the amplification of biological molecule nucleic acid and thereby subsequent detection. Amplification of biological molecules, not comprising a blocker, is not impaired thereby allowing amplification and subsequent detection of unblocked biological molecules.

Figure 3. Schematic representation of a method in which detection of a biological molecule of a combinatorial library may be blocked by a blocking agent. In this example the blocker comprises a protein nucleic acid (PNA) sequence that is complementary to a part of the nucleic acid sequence of the biological molecule thereby allowing hybridization. Hybridization of the blocker in this example, inhibits a selectable quality such as a restriction site, thereby in the case of a restriction site, disallowing cloning of the blocked biological molecule. When the detection system comprises detection of cloned biological molecules then inhibition of the selectable quality results in blocking of detection of blocked biological molecules.

Figure 4. Schematic representation of an example wherein the blocker is associated to a solid support. The solid support may be a bead as depicted and/or a surface. In this schematic representation the blocker is associated with a biological molecule of the library.

Figure 5. **Photograph of an ethidiumbromide stained 12% polyacrylamid gel containing separated DNA after PCR.** On top is indicated if template DNA and/or PNA was added to the PCR mixture. Each PCR mixture also contained 2.5 * 10⁻⁷ M of both primers OMP351 and P1A, 0.25 mM of each dNTP and 5 U SuperTaq (HT Biotechnologies Ltd., Cambridge, UK) polymerase in a total volume of 100 µl SuperTaq buffer. Before starting the PCR 70 µl of mineral oil is put on top to avoid evaporation. The PCR was performed on a hybaid™ thermal reactor (HYBAID, Middlesex, UK), using to following program: 10' 95°C, 17 cycles {1' 95°C, 1' 56°C, 1' 48°C, 1' 72°C}, 10' 72°C. Of each sample 20 µl was mixed with 5 µl loading buffer and separated on a 12% polyacrylamid gel at 10 V/cm for 2 hours (detailed procedure: J. Sambrook, E.F. Fritsch, T. Maniatis, Molecular Clonin: A laboratory manual. Cold Spring harbor Laboratory press, 1989). DNA was visualized with UV after ethidiumbromide staining. DNA concentration after PCR was determined using the PicoGreen dsDNA Quantitation Kit (Molecular Probes Eugene, Oregon, USA) and a LS50B luminescence spectrometer with well-plate reader (Perkin-Elmer Corp., Analytical Instruments, Norwalk CT, USA).

## Claims

1. A method for detecting in a library of biological molecules representing a set of combinations of values for variables of a computational problem, a possibly present biological molecule representing a combination of values for said variables, which combination is a true solution for said problem, characterized in that at least one biological molecule representing a false solution of said problem is blocked.

2. A method according to claim 1, wherein said biological molecule representing a true solution is not blocked.

3. A method according to claim 1 or claim 2, wherein essentially all biological molecules representing false solutions of said computational problem are blocked.

4. A method according to anyone of claims 1-3, further comprising blocking an identified biological molecule representing a true solution of said problem and identifying in said library, a possibly present biological molecule representing a combination of values for variables, which combination is a another true solution to said problem.

5. A method according to anyone of claims 1-4, wherein said blocking prevents detection of a blocked biological molecule as a true solution.

6. A method according to anyone of claims 1-5, wherein a part of a biological molecule is blocked.

7. A method according to claim 6, wherein said part represents a combination of values for variables of a sub problem of said computational problem.

8. A method according to claim 7, wherein said part represents a false solution for said sub problem.

9. A method according to anyone of claims 6-8, wherein said part represents a clause of a conjunctive normal form representation of said computational problem.

10. A method according to anyone of claims 1-9, wherein said library of biological molecules comprises nucleic acid or a functional analogue thereof.

11. A method according to claim 10, wherein a biological molecule is blocked by the hybridization thereto of a nucleic acid or a functional equivalent thereof, comprising complementarity to at least part of said biological molecule.

12. A method according to claim 11, wherein said nucleic acid comprises peptide nucleic acid.

13. A method according to anyone of claims 1-12, further comprising subjecting said library to an amplification step.

14. A method according to claim 12, wherein said blocking at least in part prevents amplification of a blocked biological molecule.

15. A method according to claim 13 or claim 14, wherein said amplification step comprises a nucleic acid amplification reaction such as polymerase chain reaction and/or a nucleic acid amplification in a cell.

16. A method according to anyone of claims 1-15, wherein said blocking results in quenching of fluorescence of a blocked biological molecule.

17. A method according to anyone of claims 1-16, wherein a biological molecule and/or a blocked biological molecule is linked to a solid surface.

18. A method according to claim 17, wherein said solid surface comprises a multiplicity of compartments wherein each of said compartments comprises at least one biological molecule of said library.

19. Use of a blocking agent for enabling elimination of detection of a biological molecule in a library of biological molecules representing a set of combinations of values for variables of a computational problem.

20. A method according to anyone of claims 1-18 or a use according to claim 19, wherein said computational problem comprises a SAT problem and/or a SAT related problem.
